# EUROPEAN PATENT APPLICATION

(11) **EP 3 021 015 A1**
(43) Date of publication of application: **18.05.2016**
(21) Application number: 14193192.3
(22) Date of filing: 14.11.2014
(51) Int. Cl.: F16J 15/44

(54) **Seal assembly**

(71) Applicant: ALSTOM Technology Ltd, 5400 Baden (CH)
(72) Inventor: Hemsley, Philip David, Rugby, Warwickshire CV22 5HD (GB); Littlewood, David, Rugby, Warwickshire CV21 4NP (GB); Tao, Jiwen, Rugby, Warwickshire CV22 7UE (GB); Cunningham, Robert, Rugby, Warwickshire CV21 4HJ (GB); Bertoni, Giampaolo, Rugby, Warwickshire CV22 7TG (GB); Shurrock, Timothy George, Rugby, Warwickshire CV22 5HN (GB)
(74) Representative: General Electric Technology GmbH

(57) **Abstract**

The invention relates to a seal assembly for sealing between a steam turbine stationary component (10) and a steam turbine rotating component (12). The seal assembly is made up of gland segments (20) that form a ring around the rotating component (12) and stoppers (28a, 28b) that split the seal assembly in the horizontal plain (30). The seal assembly further comprises springs (26a, 26b, 26 g, 26h) between gland segments (20) for biasing gland segments (20) apart and springs (26c, 26d, 26e, 26f), located adjacent the stoppers (28a, 28b), for biasing seal gland segments towards the rotating component (12) in the region of the stoppers (28a, 28b) so as to overcome frictional forces caused by the stoppers (28a, 28b).

## Description

### TECHNICAL FIELD

The present invention relates to seals employed in elastic fluid axial flow turbines and, more particularly, to segmented packing ring seals arranged around rotatable shafts that penetrate stationary turbine casings and/or seals arranged internally to casings between stages and turbine sections.

### BACKGROUND INFORMATION

Sealing devices used on turbines are typically known as steam seals, gland seals, labyrinth seals, steam packings, diaphragm packings, and pressure packings. In order to keep the gland close to the sealing surface a spring may be located at the back of the seal. Should the sealing surface contact the seal the spring enables the seal to be pushed away from the sealing surface thus reducing possible damage to the seal. While this arrangement can overcome problems caused by misalignment and seal gap variations it may inevitably lead to contact between the seal and seal surface and thus does not eliminate the problem of seal contact damage. To overcome this problem so call retractable seals were developed.

U.S Patent No. 5810365 discusses one retractable seal that includes a seal ring with a plurality of labyrinth type teeth for providing a seal with a shaft portion. The seal ring, which is retained in an annular groove of a casing, comprises four or more segments disposed within a retaining groove. Springs are located in a hole at one end of each seal ring segment to hold the segments in a compressed condition. Positive circumferential location and retainment of the seal ring segments and springs is achieved by locking pieces provided above casing joints. As discussed in U.S Patent No. 6651986 a locking, or stop piece of this type can be adapted to prevent circumferential displacement of lower side packing ring segments by upper side packing ring segments due to gravity wherein the low and upper sides are defined by a horizontal split plain of the turbine.

At low or no load conditions, the weight of the seal ring segments, the confining limits of the casing, and the force of the springs act on the seal rings define the seal gap. Typically springs are selected with sufficient strength and dimension such that under these conditions the seal ring segments are separated at each segment join thereby creating sufficient annular space between the rotor and the ring segment to accommodate transient misalignment with minimal damage to the seal ring teeth.

After the turbine has been accelerated to operating speed and partially loaded, load increases result in increased fluid pressure proportionately around the rings resulting in a compression of the seal ring segments.

In order to select the appropriate spring strength to achieve uniform compression the individual springs acting upon the seal ring segments, it is necessary to at least consider fluid pressure, weight of the seal ring segments and frictional forces. While spring forces can be calculated using standard methods once these factors are known, it is difficult to provide springs that are suitable for the life of the seal as frictional forces typically change with time. This can be, for example, through corrosion of surfaces compromising the ability of the seal segment to uniformly retract and can particularly be a problem if the corrosion occurs in the region of the lock or stopper piece where frictional forces are typically greatest.

### SUMMARY

Provided is a seal assembly that minimise the risk of loss of movement of gland segments in the regions of the horizontal joint of a steam turbine while enabling retractable operation at the top and bottom of the seal assembly.

The disclosure is based on the general idea of providing a seal assembly that comprises a combination of a spring back arrangement near the horizontal plain to overcome friction between a sealing ring and a stopper and a retractable seal arrangement in regions distal from the horizontal plain.

One general aspect includes a seal assembly for sealing between a steam turbine stationary component and a steam turbine rotating component, the seal assembly comprising a plurality of circumferentially adjacent arcuate gland segments aligned to form a ring that encloses the steam turbine stationary component. The seal assembly also includes a horizontal plain that splits the seal assembly into an upper half located above the horizontal plain and a lower half located below the horizontal plain. The seal assembly has a first spring in the upper half located in the ring so as to bias apart the gland segments in the upper half and a second spring in the lower half located in the ring so as to bias apart the gland segments in the lower half. A first stopper and a second stopper, diagonally opposite the first stopper, each configured and arranged in the horizontal plain so as to isolate the ring in the lower half from a gravitational force of the ring in the upper half. A further third spring in the upper half located between the stationary component and the ring and towards the first stopper biases the ring at the first stopper towards the rotating component while a fourth spring, is located in the upper half between the stationary component and the ring and towards the second stopper, biases the ring at the second stopper towards the stationary component. A fifth spring in the lower half is located between the stationary component and the ring and towards the first stopper and biases the ring at the first stopper towards the rotating component while a sixth spring is located in the lower half between the stationary steam turbine component and the ring and towards the second stopper and biases the ring at the second stopper towards the stationary component.

Further aspects may include one or more of the following features. The seal assembly wherein the third spring, the fourth spring, the fifth spring and the sixth spring are located adjacent the stopper. The seal assembly wherein the gland segments of the upper half comprises a first gland segment adjacent the first stopper, a second gland segment adjacent the first gland segment, and a third gland segment adjacent the second gland segment and the second stopper such that the second segment is between the first gland segment and the third gland segment, and the first spring is located between the first gland segment and the second gland segment and a seventh spring is located between the second gland segment and the third gland segment. The seal assembly wherein the first gland segment, the second gland segment and the third gland segment each have a circumferential length and the circumferential lengths are equal. The seal wherein the gland segments of the ring in the lower half comprises a fourth gland segment adjacent the first stopper, a fifth gland segment adjacent the fourth gland segment, and a sixth gland segment adjacent the fifth gland segment the second stopper such that the fifth gland segment is between the fourth gland segment and the sixth gland segment, and the second spring is located between the fourth gland segment and the fifth gland segment and an eighth spring is located between the fifth gland segment and the sixth gland segment. The seal assembly wherein the fourth gland segment, the fifth gland segment and the sixth gland segment each have a circumferential length and the circumferential lengths are equal.

Other aspects and advantages of the present disclosure will become apparent from the following description, taken in connection with the accompanying drawing which by way of example illustrates exemplary embodiments of the present invention.

### BRIEF DESCRIPTION OF THE DRAWINGS

By way of example, an embodiment of the present disclosure is described more fully hereinafter with reference to the accompanying drawing, in which:

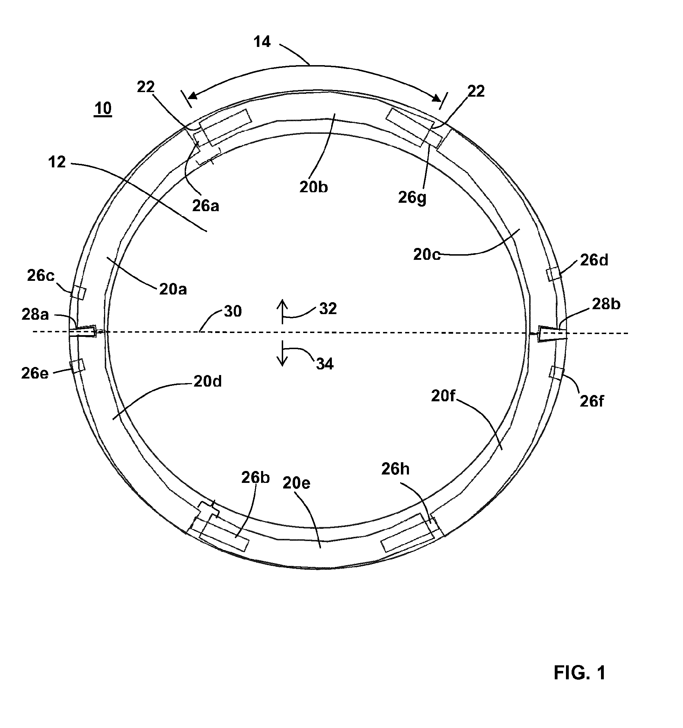

Figure 1 is a schematic of a seal assembly according to an exemplary embodiment of the disclosure.

### DETAILED DESCRIPTION

Exemplary embodiments of the present disclosure are now described with references to the drawing, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein.

An exemplary embodiment of a seal assembly shown in Fig. 1 provides a means of sealing between a steam turbine stationary component 10, such as a casing, and a steam turbine rotating component 12, such as a rotor or rotating blade row. The seal assembly comprises a plurality of circumferentially arcuate gland segments 20 that form a ring.

As shown in Fig. 1, the sealing assembly is split by a horizontal plain 30 into an upper half 32 located above the horizontal plain 30 and a lower half 34 located below the horizontal plain 30. The horizontal plain 30 corresponds to the split line commonly found in industrial steam turbines.

The upper half 32 comprises two or more gland segments 20a, 20b, 20c. As shown in Fig, 1, away from the horizontal plain 30, springs 26a, 26g are locate between adjacent gland segments 20a, 20b, 20c so as to bias apart the gland segments 20a, 20b, 20ct.

A similar arrangement is provided in the lower half 34 of the seal assembly. That is, the lower half 34 comprises two or more gland segments 20d, 20e, 20f. As shown in Fig, 1, away from the horizontal plain 30, springs 26b, 26h are located between adjacently gland segments 20d, 203, 20f to bias apart the gland segments 20d, 20e, 20f.

Where the horizontal plain 30 splits the ring there is located a first stopper 28a and a second stopper 28b diagonally opposite the first stopper 28a. The purpose of the stoppers 28a, 28b is to isolate the ring lower half 34 from a gravitational force of the upper half 32. This can be achieved by the stoppers 28a, 28b projecting from the stationary component 10 into a recess formed in the ring.

In an exemplary embodiment shown in Fig.1, the seal in both the upper half 32 and the lower half 34 comprise three gland segments 20a, 20b, 20c, 20d, 20e, 20f, each with a circumferential length 14. In an exemplary embodiment, each of the gland segments 20a, 20c, 20d, 20f adjacent the horizontal plain 30 have the same circumferential length. In another not shown exemplary embodiment, all of the gland segments 20a, 20b, 20c, 20d, 20e, 20f have the same circumferential length 14. In further not shown exemplary embodiments each of the gland segments 20a, 20b, 20c, 2d, 20e, 20f in each of the seal halves 32, 34 have different circumferential lengths 14.

As shown in Fig. 1, an exemplary embodiment of the seal assembly comprises additional springs near the stoppers 28a, 28b. In particular, a spring 26c in the upper half 32 is located between the stationary component 10 and a first gland segment 20a towards the first stopper 28a while a spring 26d in the upper half 32 is located between the stationary component 10 and a third gland segment 20c towards the second stopper 28b and a spring 26e in the lower half 34 is located between the stationary component 10 and a fourth gland segment 20d towards the first stopper 28a and a further spring 26f in the lower half 34 is located between the stationary component 10 and a sixth gland segment 20f towards the second stopper 28b. The location of each of these springs 26c, 26d, 26e, 26f toward either the first stopper 28a or the second stopper 28b enables the springs 26c, 26d, 26e to bias the gland segments 20a, 20c, 20d, 20f at the stoppers 28a, 28b towards the rotating component so by overcoming frictional forces between the stoppers 28a, 28b and the gland segments 20am 20c, 20d, 20f. This can further be achieved if the springs are located adjacent the stopper 28a, 28b.

Although the disclosure has been herein shown and described in what is conceived to be the most practical exemplary embodiment the present disclosure can be embodied in other specific. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: stationary component (casing)
- 12: rotating component (rotor)
- 14: longitudinal length
- 20,a,b,c,d,e,f: gland segment
- 22: end
- 26a,b,c,d,e,f,g,h: spring
- 28a,b: stopper
- 30: horizontal plain
- 32: upper half
- 34: lower half

## Claims

1. A seal assembly for sealing between a steam turbine stationary component (10) and a steam turbine rotating component (12), the seal assembly comprising:
a plurality of circumferentially adjacent arcuate gland segments (20) aligned to form a ring that encloses the steam turbine rotating component (12), the ring including:
a horizontal plain (30) that splits the seal assembly into an upper half (32) located above the horizontal plain (30) and a lower half (34) located below the horizontal plain (30);
a first spring (26a), in the upper half (32), located in the ring so as to bias apart the gland segments (20a, 20b, 20c) in the upper half (32);
a second spring (26b), in the lower half (34), located in the ring so as to bias apart gland segments (20d, 20e, 20f) in the lower half (34);
a first stopper (28a) and a second stopper (28b) diagonally opposite the first stopper (28a) each configured and arranged in the horizontal plain (30) so as to isolated the ring in the lower half (34) from a gravitational force of the ring in the upper half (32);
a third spring (26c), in the upper half (32), located between the stationary component (10) and the ring and towards the first stopper (28a) so as to bias the ring at the first stopper (28a) towards the rotating component;
a fourth spring ( 26d), in the upper half (32), located between the stationary component (10) and the ring and towards the second stopper (28b) so as to bias the ring at the second stopper (28b) towards the stationary component (10);
a fifth spring (26e), in the lower half (34), located between the stationary component (10) and the ring and towards the first stopper (28a) so as to bias the ring at the first stopper (28a) towards the rotating component; and
a sixth spring (26f), in the lower half (34), located between the stationary steam turbine component and the ring and towards the second stopper (28b) so as to bias the ring at the second stopper (28b) towards the stationary component (10).

2. The seal assembly of claim 1 wherein the third spring (26c) and the fourth spring (26d) are located adjacent the first stopper (28a) while the fifth spring (226f) and the sixth spring (26f) are located adjacent the second stopper (28b).

3. The seal assembly of claim 1 wherein the gland segments (20a, 20b, 20c) of the upper half (32) comprises:
a first gland segment (20a) adjacent the first stopper (28a);
a second gland segment (20b) adjacent the first gland segment (20a); and
a third gland segment (20c) adjacent the second gland segment (20b) and the second stopper (28b) such that the second gland segment (20b) is between the first gland segment (20a) and the third gland segment (20c),
wherein the first spring (26a) is located between the first gland segment (20a) and the second gland segment (20b) and a seventh spring (26g) is located between the second gland segment (20b) and the third gland segment (20c) so as to bias apart the second gland segment (20b) and the third gland segment (20c).

4. The seal assembly of claim 3 wherein the first gland segment (20a), the second gland segment (20b) and the third gland segment (20c) have each have a circumferential length (14) that are equal.

5. The seal of claim 1 wherein the gland segments (20) of the ring in the lower half (34) comprises:
a fourth gland segment (20d) adjacent the first stopper (28a);
a fifth gland segment (20e) adjacent the fourth gland segment (20d); and
a sixth gland segment (20f) adjacent the fifth gland segment (20e) and the second stopper (28b) such that the fifth gland segment (20e) is between the fourth gland segment (20d) and the sixth gland segment (20f),
wherein the second spring (26b) is located between the fourth gland segment (20d) and the fifth gland segment (20f) and an eighth spring (26h) is located between the fifth gland segment (20e) and the sixth gland segment (20f) so as to bias apart the fifth gland segment (20e) and the sixth gland segment (20f).

6. The seal assembly of claim 5 wherein the fourth gland segment (20d), the fifth gland segment (20e) and the sixth gland segment (20f) each have a circumferential length (14) and the circumferential lengths (14) are equal.
